# EUROPEAN PATENT APPLICATION

(11) **EP 4 613 619 A1**
(43) Date of publication of application: **10.09.2025**
(21) Application number: 24219352.2
(22) Date of filing: 12.12.2024
(51) Int. Cl.: B62K 5/10

(54) **ANTI-TILTING PARKING STABILIZATION STRUCTURE**

(30) Priority: 05.03.2024 TW 113107951
(71) Applicant: Rexon Industrial Corp. Ltd., Taichung 41279 (TW)
(72) Inventor: CHANG, Yao-Jen, Taichung City 412 (TW)
(74) Representative: Viering, Jentschura & Partner mbB Patent- und Rechtsanwälte

(57) **Abstract**

An anti-tilting parking stabilization structure (100) applied to a cargo bike (200) includes a fixed member (10) disposed on an outer wall of a cargo hold (210) of the cargo bike (200); and a fixing device (20) disposed on a head tube (220) of the cargo bike (200). The fixing device (20) has a connecting member (21) and a fixing member (22). The connecting member (21) connects the head tube (220) and the fixing member (22). The fixing member (22) moves between a releasing position (PI) and a fixing position (P2). When the fixing member (22) is at the fixing position (P2), the fixing member (22) is inserted into the fixed member (10) to position the head tube (220). Therefore, the present application resolves the issues of inconvenient and laborious parking of conventional cargo bikes.

## Description

### BACKGROUND OF THE APPLICATION

### 1. Field of the Application:

The present application relates to stabilization structures, and more particularly, to an anti-tilting parking stabilization structure.

### 2. Description of the Related Art:

Cargo bikes have been developed for many years around the world. Especially in Europe and the United States, due to the relatively large cargo racks thereof that are capable of carrying heavier and larger items, cargo bikes have become one of the most commonly used vehicles for transporting people or goods.

However, the parking structure of a conventional cargo bikes is typically arranged at the bottom of the bike. Therefore, to park the cargo bike, a user has to leave the cargo bike and use his/her foot to pedal the parking structure to complete the parking action. Therefore, the conventional cargo bike has issues of inconvenient and laborious parking.

### SUMMARY OF THE APPLICATION

The present application aims at resolving the issues of inconvenient and laborious parking of conventional cargo bikes.

For achieving the aforementioned objectives, the present application provides an anti-tilting parking stabilization structure applied to a cargo bike, the anti-tilting parking stabilization structure comprising:
a fixed member disposed on an outer wall of a cargo hold of the cargo bike; and
a fixing device disposed on a head tube of the cargo bike; the fixing device comprising a connecting member and a fixing member, the connecting member connecting the head tube and the fixing member, the fixing member being movable between a releasing position and a fixing position; when the fixing member is at the fixing position, the fixing member is inserted into the fixed member to position the head tube.

In another embodiment of the present application, the fixed member comprises a fixing recess, into which the fixing member is inserted at the fixing position.

In another embodiment of the present application, the fixing recess comprises a guiding section on one end thereof adjacent to the head tube, and the guiding section tapers toward a direction away from the head tube.

In another embodiment of the present application, the connecting member comprises a installation hole; the fixing member slides between the releasing position and the fixing position along an axial direction of the installation hole.

In another embodiment of the present application, the connecting member comprises a positioning slot concavely disposed on an inner wall thereof; the fixing member comprises a positioning part arranged around a periphery of the fixing member corresponding to the positioning slot.

In another embodiment of the present application, the positioning slot comprises a first positioning face and a second positioning face, and the positioning part comprises a first abutting face and a second abutting face; when the fixing member is at the releasing position, the first abutting face abuts against the first positioning face; when the fixing member is at the fixing position, the second abutting face abuts against the second positioning face.

In another embodiment of the present application, the fixing member comprises a grip part disposed on one end thereof away from the fixed member.

With such configuration, the stabilization structure disclosed by the present application is arranged on the head tube. Therefore, a user is allowed to conveniently insert the fixing member in the fixing recess to position the head of the cargo bike, resolving the issues of inconvenient and laborious parking of conventional cargo bikes.

### BRIEF DESCRIPTION OF THE DRAWINGS

**Fig. 1** is a perspective view of the cargo bike, illustrating the arrangement position of the anti-tilting parking stabilization structure in accordance with an embodiment of the present application.
**Fig. 2** is an exploded view of the anti-tilting parking stabilization structure in accordance with an embodiment of the present application.
**Fig. 3** is a sectional side view of the cargo bike in accordance with an embodiment of the present application.
**Fig. 4** is a partially enlarged view of the area enclosed by the dotted line in **Fig. 3****,** illustrating the fixing member at the releasing position.
**Fig. 5** is a sectional side view of the cargo bike in accordance with an embodiment of the present application.
**Fig. 6** is a partially enlarged view of the area enclosed by the dotted line in **Fig. 5****,** illustrating the fixing member at the fixing position.

### DETAILED DESCRIPTION OF THE APPLICATION

The aforementioned and further advantages and features of the present application will be understood by reference to the description of the preferred embodiment in conjunction with the accompanying drawings where the components are illustrated based on a proportion for explanation but not subject to the actual component proportion.

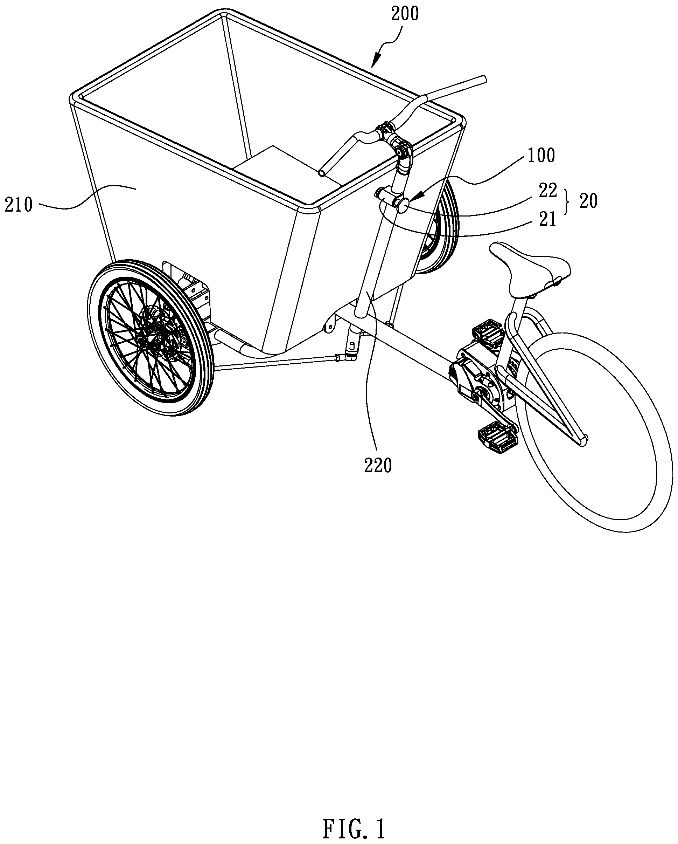

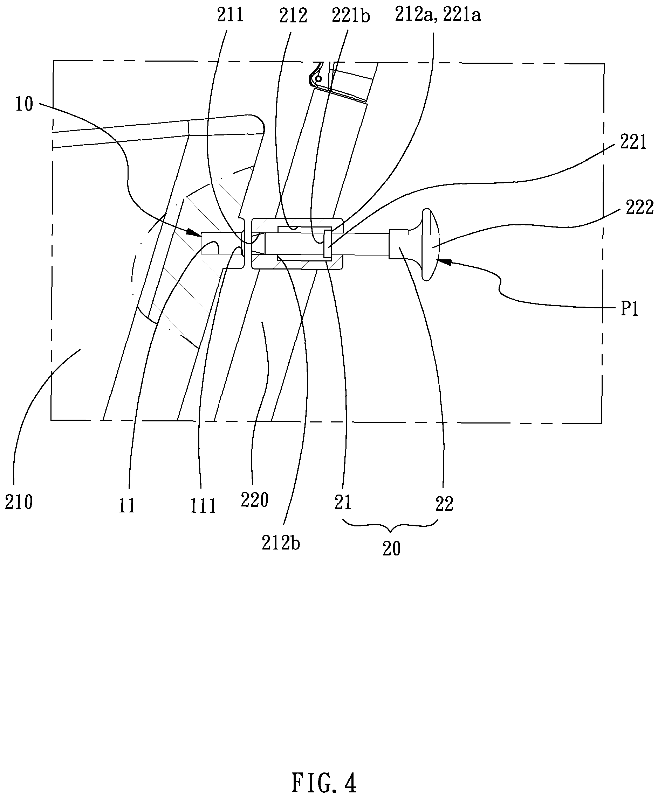

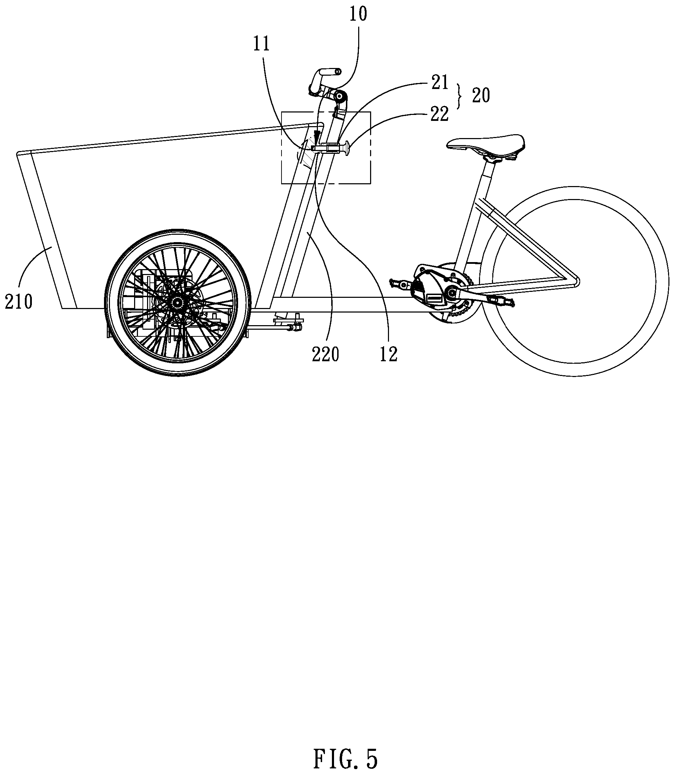

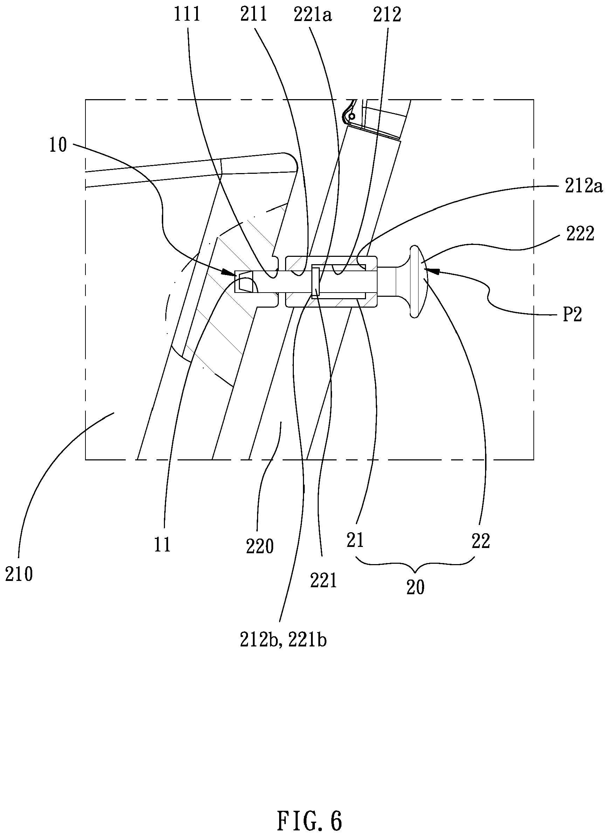

Referring to **Fig. 1** to **Fig. 6****,** the present application provides an anti-tilting parking stabilization structure 100 in accordance with an embodiment, which is applied to a cargo bike **200.** The anti-tilting parking stabilization structure **100** comprises a fixed member **10** and a fixing device **20.** Therein, the cargo bike **200** comprises a cargo hold **210** and a head tube **220.** The cargo hold **210** is disposed on a front side of the head tube **220** for carrying goods or a child. In the embodiment, the cargo bike **200** is, for example but not limited to, a threewheeled cargo bike **200.** The parking anti-tilt fixation structure **100** of this application is allowed to be applied to any cargo bikes **200** with similar structure.

The fixed member **10** is disposed on an outer wall of the cargo hold **210** of the cargo bike **200.** As shown in the drawings, in the embodiment, the fixed member **10** comprises a concave fixing recess **11,** and the fixing device **20** is inserted into the fixing recess **11,** such that when the cargo bike **200** is in the parked status, the head tube **220** is connected with and fixed to the cargo hold **210,** preventing the head of the cargo bike **200** from entering a tilting status. Therein, an inner wall of the fixing recess **11** tapers toward a direction away from the head tube **220,** so that the tapering fixing recess **11** allows a user to conveniently insert the fixing device **20** thereinto.

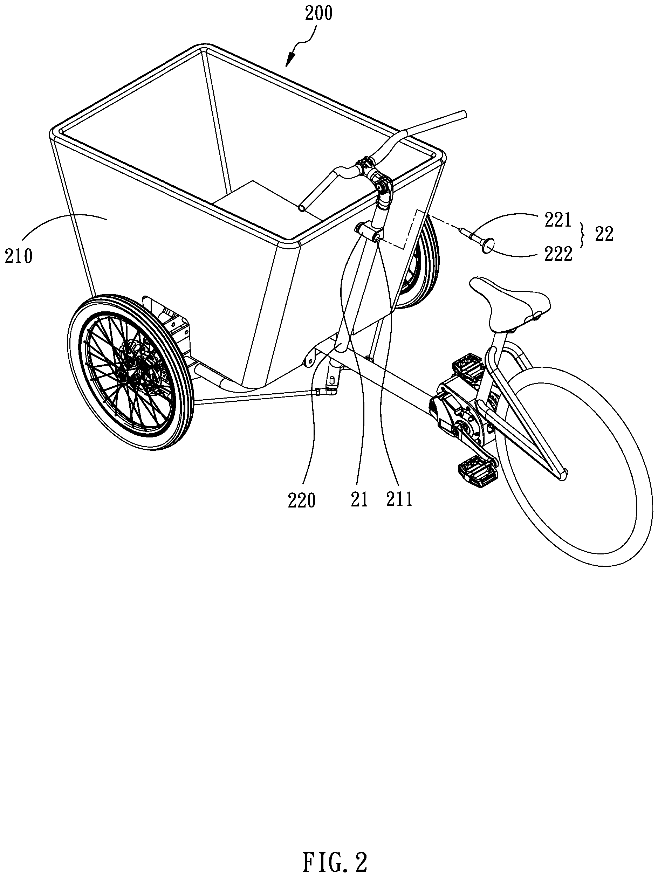

Referring to **Fig. 2** to **Fig. 4****,** in the embodiment, the fixing recess **11** comprises a guiding section **111** disposed on an end of the fixing recess **11** adjacent to the head tube **220.** The guiding section **111** tapers toward the direction away from the head tube **220,** so that with the guidance of the tapering guiding section **111,** the user is able to smoothly insert the fixing device **20** into the fixing recess **11.** Therein, in another embodiment, the guiding section **111** is allowed to extend to reach the bottom of the fixing recess **11.**

The fixing device **20** is disposed on the head tube **220** of the cargo bike **200.** The fixing device **20** comprises a connecting member **21** and a fixing member **22.** The connecting member **21** connects the head tube **220** and the fixing member **22.** The fixing member **22** is allowed to move between a releasing position **P1** and a fixing position **P2.** When the fixing member **22** is at the releasing position **P1,** the fixing member **22** leaves the fixing recess **11,** allowing the user to freely control the head of the cargo bike **200.** When the fixing member **22** is at the fixing position **P2,** the fixing member **22** is inserted into the fixed member **10** for positioning the head tube **220,** such that when the cargo bike **200** is in the parked status, the head tube **220** is prevented from randomly tilting or shaking. Therein, the fixing member **22** is formed of, for example but not limited to, a metal material. The material of the fixing member **22** is allowed to be a plastic material having a structural strength near or higher than the structural strength of metal.

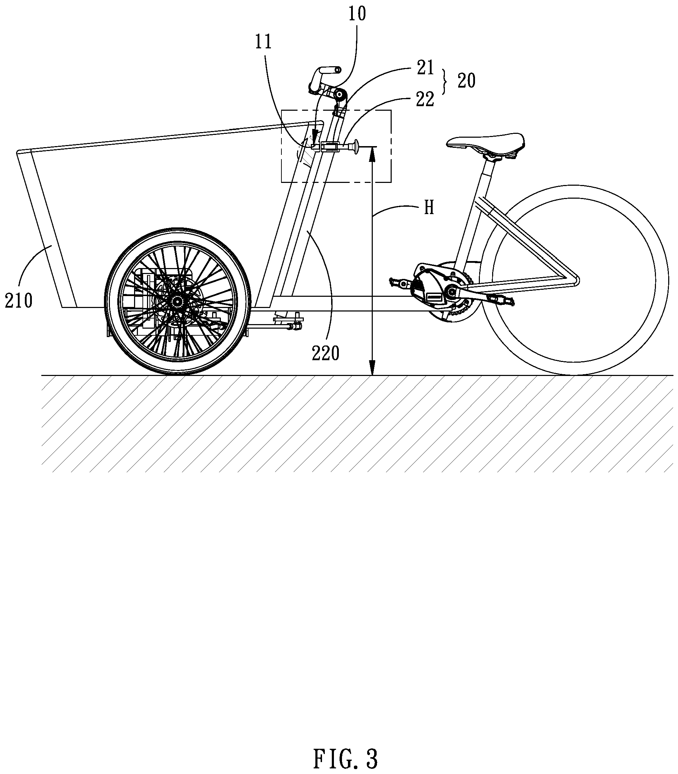

Referring to **Fig. 3** to **Fig. 6****,** in the embodiment, the connecting member **21** comprises an installation hole **211** passing therethrough. The fixing member **22** slides between the releasing position **P1** and the fixing position **P2** along an axial direction of the installation hole **211.** Therein, the user is able to align the installation hole **211** with the fixing recess **11,** arranging the installation hole **211** and the fixing recess **11** in an coaxial alignment, whereby the fixing member **22** is able to be smoothly inserted into the fixing recess **11.**

Referring to **Fig. 3** to **Fig. 6****,** in the embodiment, the connecting member **21** comprises a positioning slot **212** concavely disposed on an inner wall of the connecting member **21,** and the fixing member **22** comprises a positioning part **221** arranged around a periphery of the fixing member **22** corresponding to the positioning slot **212.** The positioning slot **212** and the positioning part **221** are configured to limit the movement of the fixing member **22** between the releasing position **P1** and the fixing position **P2,** so as to prevent the fixing member **22** from leaving the range between the releasing position **P1** and the fixing position **P2,** avoiding damage of the fixing member **22.**

In addition, the positioning slot **212** comprises a first positioning face **212a** and a second positioning face **212b,** and the positioning part **221** comprises a first abutting face **221a** and a second abutting face **221b.** When the fixing member **22** is at the releasing position **P1,** the first abutting face **221a** abuts against the first positioning face **212a;** when the fixing member **22** is at the fixing position **P2,** the second abutting face **221b** abuts against the second positioning face **212b,** such that the positioning slot **212** and the positioning part **221** effectively prevent the fixing member **22** from leaving the range between the releasing position **P1** and the fixing position **P2,** avoiding damage of the fixing member **22.**

Referring to **Fig. 3** to **Fig. 6****,** in the embodiment, the fixing member **22** comprises a grip part **222** on one end thereof away from the fixed member **10,** allowing the user to more conveniently grip and move the fixing member **22,** such that the grip part **222** improves the convenience of usage of the fixing member **22.**

Referring to **Fig. 3****,** in the embodiment, the fixing device **20** is arranged at a mounting height **H,** which is between 750mm and 850mm from the ground in the vertical direction. The mounting height **H** of the fixing device **20** is approximately at the waist height of an adult. Therefore, in typical usage scenarios, the user does not need to bend down in order to operate the fixing member **22.** Thus, the fixing device **20** at such height allows users to more easily and effortlessly operate the fixing member **22.**

With such configuration, compared with the fixing structure arranged at the bottom of a conventional cargo bike, the anti-tilting parking stabilization structure **100** provided by the present application is disposed on the head tube **220.** Therefore, the user is able to insert the fixing member **22** into the fixing recess **11** while remaining on the seat, so as to fix the head of the cargo bike **200,** thereby resolving the issues of inconvenient and laborious parking of conventional cargo bikes.

Although particular embodiments of the application have been described in detail for purposes of illustration, various modifications and enhancements may be made without departing from the scope of the application. Accordingly, the application is not to be limited except as by the appended claims.

## Claims

1. An anti-tilting parking stabilization structure (100) disposed on a cargo bike (200), the anti-tilting parking stabilization structure (100) comprising:
a fixed member (10) disposed on an outer wall of a cargo hold (210) of the cargo bike (200); and
a fixing device (20) disposed on a head tube (220) of the cargo bike (200); the fixing device (20) comprising a connecting member (21) and a fixing member (22), the connecting member (21) connecting the head tube (220) and the fixing member (22), the fixing member (22) being movable between a releasing position (P1) and a fixing position (P2); when the fixing member (22) is at the fixing position (P2), the fixing member (22) is inserted into the fixed member (10) to position the head tube (220).

2. The anti-tilting parking stabilization structure (100) of claim 1, wherein the fixed member (10) comprises a fixing recess (11); when the fixing member (22) is at the fixing position (P2), the fixing member (22) is inserted into the fixing recess (11).

3. The anti-tilting parking stabilization structure (100) of claim 2, wherein the fixing recess (11) comprises a guiding section (111) on one end of the fixing recess (11) adjacent to the head tube (220), and the guiding section (111) tapers toward a direction away from the head tube (220).

4. The anti-tilting parking stabilization structure (100) of claim 1, wherein the connecting member (21) comprises a installation hole (211) passing therethrough; the fixing member (22) slides between the releasing position (P1) and the fixing position (P2) along an axial direction of the installation hole (211).

5. The anti-tilting parking stabilization structure (100) of claim 1, wherein the connecting member (21) comprises a positioning slot (212) concavely disposed on an inner wall of the connecting member (21); the fixing member (22) comprises a positioning part (221) arranged around a periphery of the fixing member (22) corresponding to the positioning slot (212).

6. The anti-tilting parking stabilization structure (100) of claim 5, wherein the positioning slot (212) comprises a first positioning face (212a) and a second positioning face (212b), and the positioning part (221) comprises a first abutting face (221a) and a second abutting face (221b); when the fixing member (22) is at the releasing position (P1), the first abutting face (221a) abuts against the first positioning face (212a); when the fixing member (22) is at the fixing position (P2), the second abutting face (221b) abuts against the second positioning face (212b).

7. The anti-tilting parking stabilization structure (100) of claim 1, wherein the fixing member (22) comprises a grip part (222) disposed on one end of the fixing member (22) away from the fixed member (10).
